Europäisches Patentamt

European Patent Office

Office européen des brevets

(11) Numéro de publication: **0 395 502**
**A1**

## (12) DEMANDE DE BREVET EUROPEEN

(21) Numéro de dépôt: 90401113.7

(51) Int. Cl.5: **B01D 21/24**

(22) Date de dépôt: 25.04.90

(30) Priorité: 28.04.89 FR 8906144

(43) Date de publication de la demande:
31.10.90 Bulletin 90/44

(84) Etats contractants désignés:
**BE DE ES GB IT NL**

(71) Demandeur: **ETABLISSEMENTS F. MORET
Chemin des Ponts et Chaussées
F-02100 Saint-Quentin(FR)**

(72) Inventeur: **Georges, Michel
7 rue Croix St Claude Savy
F-02590 Etreillers(FR)**
Inventeur: **Prodhomme, Jean-Marie
3 rue du Champ Bernard
F-02420 Levergies(FR)**

(74) Mandataire: **Descourtieux, Philippe et al
CABINET BEAU de LOMENIE 55 rue
d'Amsterdam
F-75008 Paris(FR)**

(54) Installation de curage d'un bassin de sédimentation.

(57) L'installation selon l'invention est adaptée au curage de bassins de sédimentation dont les boues se trouvent à l'état sensiblement solide. Elle comporte , sur un châssis roulant (1) porté par deux rouleaux (14,15), un outil rotatif (24) de désagrégation, des buses (32) d'injection d'eau sous pression en amont de l'outil (24) et une pompe (23) dont la bouche d'aspiration (22) est en aval de l'outil (24). De préférence l'outil (24) comporte des fraises déplaçant la boue désagrégée vers la zone où est située la bouche d'aspiration (22) de la pompe (23).

## INSTALLATION DE CURAGE D'UN BASSIN DE SEDIMENTATION

La présente invention concerne le curage d'un bassin de sédimentation, et plus particulièrement d'un bassin dont les boues se trouvent à l'état sensiblement solide. Elle concerne notamment les bassins de sucrerie.

Les effluents des industries agro-alimentaires , par exemple de conserverie, sont entreposés dans des bassins dits de sédimentation. Les matières en suspension se déposent progressivement, tandis que l'eau s'évapore , jusqu'à obtenir des boues dans un état sensiblement pateux . Ces boues sont évacuées du bassin par pompage à l'aide de pompes immergées adaptées au pompage de liquides fortement chargés.

Les installations classiques de pompage de ce type sont cependant inopérantes lorsque les boues du bassin de sédimentation se trouvent à l'état sensiblement solide.

Or on a trouvé,et c'est ce qui fait l'objet de l'invention, une installation qui permet le curage d'un bassin de sédimentation dont les boues sont à l'état sensiblement solide.

De manière caractéristique , l'installation comporte, montés sur un châssis roulant , muni de moyens de déplacement :

a. un outil rotatif de travail du sol,

b. un ensemble de buses d'injection d'eau sous pression, dirigées à proximité immédiate de l'outil , en amont de celui-ci dans le sens de déplacement du châssis ,

c. au moins une pompe apte au pompage des liquides fortement chargés , dont la bouche d'aspiration est placée à proximité de l'outil dans une zone où la boue désagrégée est à l'état sensiblement liquide,

d. et des moyens de support du châssis , parmi lesquels au moins un rouleau porteur situé en amont de l'ensemble de buses dans le sens de déplacement du châssis et mobile en rotation.

Ainsi pendant le déplacement du châssis , l'action conjuguée de l'eau injectée sous pression et de l'outil rotatif assure la désagrégation de la boue à l'état solide , sa transformation en une boue sensiblement liquide et sa projection vers la pompe.

De préférence le sens de rotation de l'outil rotatif est celui du rouleau porteur et la bouche d'aspiration de la pompe est placée en aval de l'outil rotatif dans le sens de déplacement du châssis .

De préférence l'outil rotatif comporte au moins un tronçon de vis sans fin dont la rotation assure le déplacement de la boue désagrégée à l'état sensiblement liquide vers la bouche d'aspiration de la pompe. Il peut comporter deux tronçons de vis sans fin, ayant des filetages en sens inverse et placés de telle sorte que leur rotation assure le déplacement de la boue désagrégée à l'état sensiblement liquide vers une même zone où est située la bouche d'aspiration d'une même pompe. L'installation peut aussi comporter plusieurs pompes , chacune étant associée à un tronçon de vis sans fin.

Les moyens de support du châssis , situés en aval de l'outil rotatif , consistent en au moins un rouleau porteur, éventuellement mobile en rotation, apte à maintenir l'installation sur la boue dans un état sensiblement liquide.

Les moyens de déplacement du châssis consistent par exemple en un treuil de manoeuvre, monté sur la berge du bassin, et dont le câble est accroché à l'avant du châssis.

Selon une version préférée de l'installation, l'ensemble constitué par l'outil rotatif , les buses d'injection et la pompe est monté sur un cadre , réglable en hauteur, par exemple le cadre est solidaire du moyeu d'un rouleau porteur et le réglage s'effectue en faisant pivoter ledit cadre autour dudit moyeu.

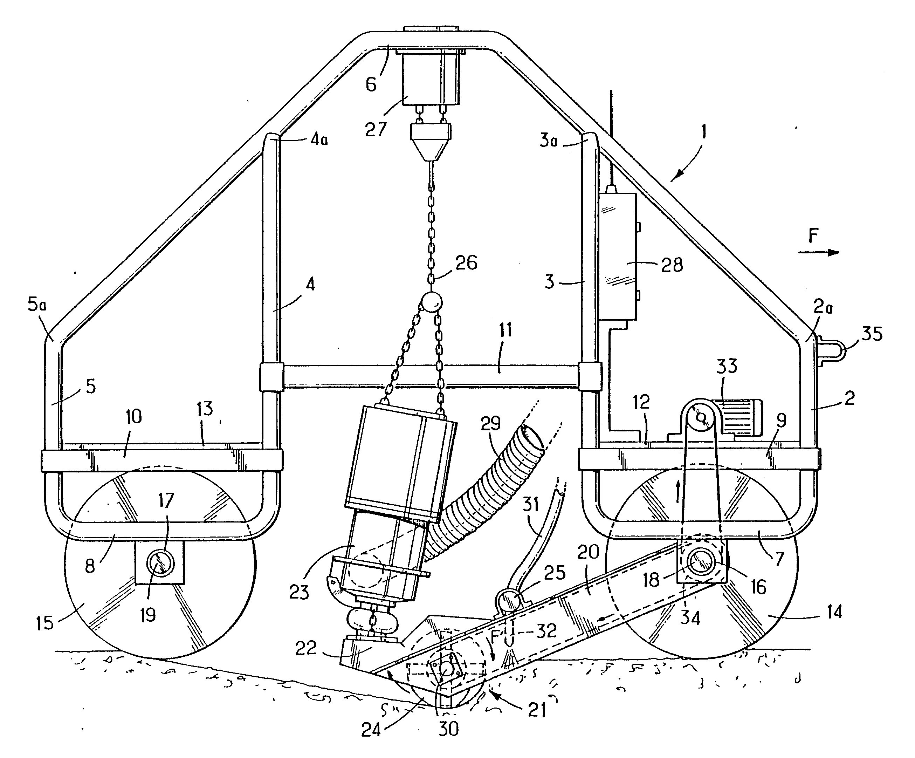

D'autres caractéristiques et avantages de l'invention apparaîtront à la lecture de la description qui va maintenant être faite d'un exemple de réalisation de l'installation , illustré par le dessin annexé dans lequel la figure unique est une vue schématique de côté.

L'ossature 1 métallique de l'installation de curage de bassin de sédimentation comporte deux jeux latéraux de quatre montants verticaux 2,3,4 et 5 . Les quatre montants de chaque jeu latéral sont reliés à leurs extrémités supérieures 2a, 3a, 4a et 5a par une traverse 6 en forme d'accent circonflexe aplati à son sommet. Les extrémités inférieures des deux premiers montants 2 , 3 et des deux derniers montants 4 et 5 sont reliées par deux prolongements coudés respectivement 7 et 8 et par deux traverses longitudinales respectivement 9 et 10. Les deux montants verticaux intermédiaires 3 et 4 sont reliés par une traverse longitudinale 11.

L'ossature 1 comporte aussi des traverses non visibles sur la figure reliant les deux jeux latéraux précités au niveau des extrémités supérieures 3a et 4a des montants verticaux 3 et 4 de chaque jeu.

Deux planches en bois 12 et 13 sont fixées sur les traverses longitudinales 9 et 10 de chaque jeu.

Deux rouleaux porteurs 14 et 15 sont fixés à l'ossature 1 grâce à deux jeux de deux paliers , respectivement 16 et 17 , montés sous les prolongements 7 et 8. Ces deux rouleaux sont libres en rotation autour de leurs axes 18 et 19 tournant dans les paliers 16 et 17 . La surface périphérique des deux rouleaux 14 et 15 est pleine afin d'assurer la meilleure assise sur le bassin de sédimentation quelle que soit la consistance de la boue.

Le rouleau 14 est le rouleau avant dans le sens de déplacement de l'installation selon la flèche F.

Entre les deux rouleaux 14 et 15 et le moyeu du rouleau 14, le cadre 20 est fixé en porte-à-faux. Sur l'extrémité libre 21 du cadre 20 sont montés , successivement en partant de ladite extrémité 21 vers le rouleau 14, en première part la bouche d'aspiration 22 de la pompe 23 , en deuxième part l'outil rotatif 24 et en troisième part la rampe d'injection 25.

La pompe 23 est une pompe de type Vortex spécialement conçue pour l'aspiration des liquides fortement chargés. Elle est maintenue en hauteur par la chaîne 26 du palan 27. Le fonctionnement du palan 27 est commandé à distance, par radio commande, par l'intermédiaire de l'armoire électrique 28. Le tuyau d'évacuation 29 assure le transport des boues après pompage.

L'outil rotatif 24 comprend un arbre tournant 30, parallèle aux axes de rotation des rouleaux porteurs 14 et 15 , sur lequel sont montées des fraises , ayant la forme de vis sans fin. Le sens des fraises est opposé d'un côté à l'autre de l'arbre et est déterminé en sorte que lors de la rotation de l'arbre , la boue désagrégée soit déplacée vers la partie médiane de l'arbre.

La rampe d'injection 25 est reliée par le conduit 31 à une source d'eau sous pression non representée. Elle comporte un ensemble de dix buses 32, réparties sur toute la largeur de travail de l'installation, ladite largeur correspondant à la longueur de l'arbre de l'outil 24.

L'arbre 30 est entraîné en rotation dans le sens de la flèche F', correspondant au sens de rotation des rouleaux porteurs 14 et 15, par le moteur 33 et par l'intermédiaire de deux jeux de courroie - roue dentée , la roue dentée intermédiaire 34 étant montée sur le moyeu du rouleau porteur 14.

Le fonctionnement de l'installation est le suivant.

L'installation est placée à un bord du bassin de sédimentation : elle est reliée par un câble à un treuil situé sur le bord opposé , le câble étant accroché par des anneaux 35 fixés sur les montants verticaux 2. Le cadre 20 est en position haute de repos.

L'opérateur déplace l'installation en agissant sur le treuil, et commande par radio le palan 27 en sorte de faire descendre le cadre 20 , pivotant autour du moyeu du rouleau 14. Les trois éléments de l'équipage , outil 24, pompe 23 et buses d'injection sont mis simultanément en fonctionnement.

La descente du cadre 20 est réglée en fonction de l'épaisseur de boue que l'on souhaite évacuer , elle-même étant fonction des autres paramètres de fonctionnement de l'installation, à savoir vitesse de déplacement , pression de l'eau injectée , puissance de la pompe , vitesse de rotation de l'outil 24, ainsi que de la consistance de la boue à l'état sensiblement solide et de sa capacité à se désagréger sous l'action conjuguée de l'outil 24 et de l'eau injectée.

Les buses d'injection 32 sont dirigées sur la boue , juste devant l'outil 24, les fraises de l'outil attaquent et morcellent cette boue, qui du fait de l'eau injectée se transforme en une boue à l'état sensiblement liquide . Les fraises en tournant déplacent cette boue vers la partie médiane de l'arbre et l'abandonnent dans la zone où affleure la bouche d'aspiration 22 de la pompe 23. Le rouleau arrière 15 a une assise suffisante pour maintenir l'installation sur la boue dans l'état sensiblement liquide où elle se trouve après le passage de l'outil.

L'invention n'est pas limitée au mode de réalisation qui vient d'être décrit mais en couvre toutes les variantes.En particulier l'outil peut être entraîné par d'autres moyens que celui décrit ci-dessus , par exemple par un moteur hydraulique, monté directement sur son axe.

Elle est d'application particulièrement intéressante pour les bassins de sédimentation de l'industrie sucrière , dont les boues sont très difficiles à déliter.

## Revendications

1. Installation de curage de bassin de sédimentation dont les boues sont à l'état sensiblement solide caractérisée en ce qu'elle comporte , montés sur un châssis (1) muni de moyens de déplacement :

a. un outil rotatif (24) de travail du sol ,

b. un ensemble de buses (32) d'injection d'eau sous pression, dirigées à proximité immédiate de l'outil (24) 7 en amont de celui-ci dans le sens de déplacement du châssis (1),

c. au moins une pompe (23) apte au pompage des liquides fortement chargés, dont la bouche d'aspiration (22) est placée à proximité de l'outil dans une zone où la boue désagrégée est à l'état sensiblement liquide,

d. et des moyens de support du châssis , parmi lesquels au moins un rouleau porteur (14) situé en amont de l'ensemble de buses (32) dans le sens de déplacement du châssis (1) et mobile en rotation.

2. Installation selon la revendication 1 caractérisée en ce que le sens de rotation de l'outil rotatif (24) est celui du rouleau porteur (14) et en ce que la bouche d'aspiration (22) de la pompe (23) est placée en aval de l'outil rotatif (24) dans le sens de déplacement du châssis (1).

3. Installation selon l'une des revendications 1 ou 2 caractérisée en ce que l'outil rotatif (24) comporte au moins un tronçon de vis sans fin dont la rotation assure le déplacement de la boue désagrégée à l'état sensiblement liquide vers la bouche (22) d'aspiration d'une pompe (23).

4. Installation selon l'une des revendications 1 à 3 caractérisée en ce que l'ensemble constitué par l'outil rotatif (24), les buses d'injection (32) et la pompe (23) est monté sur un cadre (20), réglable en hauteur.

5. Installation selon la revendication 4 caractérisée en ce que le cadre (20) est solidaire du moyeu du rouleau porteur (14) et en ce que le réglage s'effectue en faisant pivoter ledit cadre (20) autour dudit moyeu.

6. Installation selon l'une des revendications 4 ou 5 caractérisée en ce qu'elle comporte un palan (27) dont la chaîne (26) est solidaire du cadre et qui est assorti de moyens de radio-commande.

7. Installation selon la revendication 1 caractérisée en ce que les moyens de déplacement du châssis (1) consistent en un treuil de manoeuvre dont le câble est accroché à l'avant (35) du châssis (1).

8. Installation selon la revendication 1 caractérisée en ce que les moyens de support du châssis , situés en aval de l'outil rotatif (24) , consistent en un rouleau porteur (15) , éventuellement mobile en rotation, apte à maintenir l'installation sur la boue dans un état sensiblement liquide.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-2 315 254  (C.E. FRASER)<br>* Page 1, colonne de gauche, lignes 7-19; page 2, colonne de droite, ligne 13 - page 3, colonne de gauche, ligne 10; figures 1,2 * | 1,2,8 | B 01 D  21/24 |
| Y | DE-A-2 113 719  (SPEZIALNOJE PROJEKTNO-KONSTRUKTORSKOJE I NALADOTSCHNOJE BÜRO)<br>* Page 5, dernier paragraphe - page 6, paragraphe 4; page 9, paragraphe 4 - page 10, paragraphe 2; figure 1 * | 1,2,8 | |
| A | | 4,7 | |
| A | US-A-3 969 249  (J.C. DODD)<br>* Colonne 3, lignes 30-50; colonne 4, lignes 17-42; figures 2,4 * | 1,5 | |
| A | FR-A-2 554 802  (VEB PROJEKTIERUNG WASSERWIRTSCHAFT)<br>* Page 5, ligne 33 - page 6, ligne 12; figure 1 * | 1,2 | |
| | | | DOMAINES TECHNIQUES RECHERCHES (Int. Cl.5) |
| A | BE-A- 429 422  (DEUTSCHE SOLVAY-WERKE AG)<br>* Page 1, paragraphe 1; page 2, dernier paragraphe - page 3, dernier paragraphe; figure 1 * | 1,4,8 | B 01 D |

Le présent rapport a été établi pour toutes les revendications

| Lieu de la recherche | Date d'achèvement de la recherche | Examinateur |
|---|---|---|
| LA HAYE | 26-06-1990 | MARZENKE J. |